(19) Europäisches Patentamt
European Patent Office
Office européen des brevets

(11) **EP 1 833 174 A2**

(12) **EUROPEAN PATENT APPLICATION**

(43) Date of publication:
    **12.09.2007 Bulletin 2007/37**

(51) Int Cl.:
    ***H04B 1/707*** (2006.01)

(21) Application number: **07004586.9**

(22) Date of filing: **06.03.2007**

(84) Designated Contracting States:
    **AT BE BG CH CY CZ DE DK EE ES FI FR GB GR HU IE IS IT LI LT LU LV MC MT NL PL PT RO SE SI SK TR**
    Designated Extension States:
    **AL BA HR MK YU**

(30) Priority: **06.03.2006 JP 2006059098**

(71) Applicants:
    • **Riken**
      **Wako-shi, Saitama 351-0198 (JP)**
    • **ChaosWare, Inc.**
      **Koganei-shi**
      **Tokyo 184-8795 (JP)**

(72) Inventors:
    • **Hori, Gen**
      **Suginami-ku**
      **Tokyo 168-0082 (JP)**
    • **Umeno, Ken**
      **Tokyo 169-0051 (JP)**
    • **Kao, Minghui**
      **Tokyo 142-0051 (JP)**

(74) Representative: **Epping - Hermann - Fischer**
    **Ridlerstrasse 55**
    **80339 München (DE)**

(54) **Receiving device, receiving method, and program**

(57)  Provided are a receiving device which improves communication performances by separating signals in CDMA communications using a chaos code, etc.

In the receiving device (101), a receiving unit (102) receives a signal directly spread by a chaos code and transmitted from a transmitting device, a component analyzing unit (103) applies component analysis to the received signal to separate it into a plurality of components, a despreading unit (104) obtains a plurality of signals by despreading the plurality of separated components by the chaos code respectively, and a selective output unit (105) selects a signal having a large intensity from the plurality of despread signals, and outputs it.

FIG.1

EP 1 833 174 A2

**Description**

The present invention relates to a receiving device and receiving method for code division multiple access (CDMA) communication using a chaos code, which are suitable for improving communication performances by performing signal separation, and a program for realizing these on a computer or on a digital signal processor.

There have conventionally been proposed methods for separating a given data sequence into a plurality of components (principal components, independent components, factors, etc.). Such methods include principal component analysis (including component analysis by sphering), independent component analysis, component analysis by non-negative matrix factorization (NMF), etc.

Meanwhile, there have also been proposed techniques for separating signals in CDMA communications in which a number sequence generated from a maximum-length sequence is used as a spreading code.

For example, the following documents disclose such techniques.

[Patent Literature 1] Unexamined Japanese Patent Application KOKAI Publication No. 2003-141102

[Patent Literature 2] Unexamined Japanese Patent Application KOKAI Publication No. 2001-292129

[Patent Literature 3] Unexamined Japanese Patent Application KOKAI Publication No. 2005-51344

[Non-Patent Literature 1] D. D. Lee and H. S. Seung, Learning the parts of objects by non-negative matrix factorization, Nature, Vol. 401, pp. 788-791 Macmillan Magazines Ltd., October 1990

[Non-Patent Literature 2] J. Joutsensalo and T. Ristaniemi, Learning Algorithms for Blind Symbol Separation in CDMA Downlink, In Proceedings of PIMRC' 98, Boston, USA, http://www.jyu.fi/jyrkij/pimrc98.ps, September 1998

The Patent Literature 1 proposes a technique for separating changes in the amount of a chemical substance into a plurality of components by using principal component analysis and independent component analysis, and grouping the factors of production of this chemical substance based on such components.

The Patent Literature 2 proposes a technique for performing CDMA communications by using chaos codes.

The Patent Literature 3 proposes a technique for ordinary direct spreading (DS)-CDMA communication, for obtaining a plurality of signals by performing signal reception using a plurality of antennas, separating the signals by simply applying independent component analysis, and then despreading (inversely spreading) the signals.

The Non-Patent Literature 1 proposes a technique for decomposing data into factors (components) by using a matrix whose components are non-negative.

The Non-Patent Literature 2 shows the results of experiments of separating signals by applying independent component analysis, in ordinary direct spreading (DS)-CDMA communication in which a random number generated from a maximum-length sequence or the like is used as a spreading code.

In this case, the spreading code takes only two values of +1 and -1 (can be considered to be two values of +1 and 0). Therefore, when the data signal to be transmitted is spread and modulated in phase, the resultant signal appears as continuation of sections each shifted by 0° or 180° from the phase of the original carrier wave.

When such signals are received from a plurality of senders, the independence between the signals becomes very poor if the phase difference between the carrier waves is close to 0° or 180°. This is true also in the cases of amplitude modulation and frequency modulation.

It has therefore been made apparent that signal analysis by independent component analysis is difficult.

As known from such experimental results, it has been considered that there is difficulty in CDMA communications in separating signals by applying the techniques of component analysis of various types.

However, there is a strong demand for achieving improvement in communication performances by applying the techniques of component analysis of various types in CDMA communications.

Further, there is also a demand that the number of receiving antennas should be reduced, because the number of antennas is directly reflected on the cost and size.

The present invention is for solving the above-described problems and an object of the present invention is to provide a receiving device and receiving method for CDMA communication using a chaos code, suitable for improving the communication performances by separating signals, and a program for realizing these on a computer or on a digital signal processor.

A receiving device (101) according to a first aspect of the present invention comprises a receiving unit (102), a component analyzing unit (103), a despreading unit (104), and a selective output unit (105), which are configured as follows.

First, the receiving unit (102) receives a signal transmitted from a transmitting device after being directly spread by a chaos code.

The component analyzing unit (103) applies component analysis to the received signal and separates it into a plurality of components.

Further, the despreading unit (104) obtains a plurality of signals, by despreading the plurality of separated components by the chaos code respectively; and

Then, the selective output unit (105) selects a signal having a large intensity from the plurality of despread signals, and outputs it.

In the receiving device (101) according to the present invention, the component analysis by the component analyzing unit (103) may be done by any one of principal component analysis, independent component analysis, component analysis by non-negative matrix factorization (NMF), and component analysis by sphering.

In the receiving device (101) according to the present invention, the chaos code may be made of a random number sequence obtained by repeatedly applying a predetermined Chebyshev polynomial to a predetermined initial value.

Further, in the receiving device (101) according to the present invention, the transmitting device may transmit the spread signal after modulating it, and the receiving device (101) may further comprise a demodulation unit (106), which may be configured as follows.

That is, the demodulation unit (106) obtains a plurality of components, by demodulating the plurality of separated components respectively.

Meanwhile, the despreading unit (104) obtains a plurality of signals, by despreading the plurality of demodulated components by a plurality of the chaos code respectively, instead of despreading the plurality of separated components by the chaos code respectively.

A receiving method according to another aspect of the present invention is executed by a receiving device (101) having a receiving unit (102), a component analyzing unit (103), a despreading unit (104), and a selective output unit (105), and comprises a receiving step, a component analyzing step, a despreading step, and a selective outputting step, which are configured as follows.

First, at the receiving step, the receiving unit (102) receives a signal transmitted from a transmitting device after being directly spread by a chaos code.

At the component analyzing step, the component analyzing unit (103) applies component analysis to the received signal and separates it into a plurality of components.

At the despreading step, the despreading unit (104) obtains a plurality of signals by despreading the plurality of separated components by the chaos code respectively.

Then, at the selective outputting step, the selective output unit (105) selects a signal having a large intensity from the plurality of despread signals, and outputs it.

In the receiving method according to the present invention, the component analysis at the component analyzing step may be done by any one of principal component analysis, independent component analysis, component analysis by non-negative matrix factorization (NMF), and component analysis by sphering.

In the receiving method according to the present invention, the chaos code may be made of a random number sequence obtained by repeatedly applying a predetermined Chebyshev polynomial to a predetermined initial value.

In the receiving method according to the present invention, the transmitting device may transmit the spread signal after modulating it, and the method may further comprise a demodulating step, which may be configured as follows.

That is, at the demodulating step, a demodulation unit (106) obtains a plurality of components by demodulating the plurality of separated components respectively.

Meanwhile, at the despreading step, a plurality of signals are obtained not by the plurality of separated components being despread by the chaos code respectively, but by the plurality of demodulated components being despread by a plurality of the chaos code respectively.

A program according to another aspect of the present invention is configured to control a computer or a digital signal processor to function as each unit of the receiving device (101) described above, or to execute the receiving method described above.

The program according to the present invention may be recorded on a computer-readable information recording medium such as a compact disk, a flexible disk, a hard disk, a magneto-optical disk, a digital video disk, a magnetic tape, a semiconductor memory, etc.

The above-described program may be distributed and sold through a computer communication network, independently from a computer or a digital signal processor on which the program is executed. Further, the above-described information recording medium may be distributed and sold independently from a computer or a digital signal processor.

According to the present invention, it is possible to provide a receiving device and receiving method suitable for improving communication performance by performing signal separation in CDMA communications using a chaos code, and a program for realizing these on a computer or on a digital signal processor.

These objects and other objects and advantages of the present invention will become more apparent upon reading of the following detailed description and the accompanying drawings in which:

Figure 1 is an exemplary diagram showing a schematic structure of a transmitting device and a receiving device according to one embodiment of the present invention;

Figure 2 is an explanatory diagram showing second-order to fifth-order Chebyshev polynomials by graphs;

Figure 3 is an explanatory diagram showing the states of spreading codes, spread signals, carrier waves, and modulated carrier waves according to a conventional CDMA method and chaos CDMA method;

Figure 4 is an explanatory diagram showing distributions of signals, in the cases where two signals, to which different spreading codes are applied, are received at various phase difference;

Figure 5 is an exemplary diagram showing a schematic structure of a receiving device according to one embodiment of the present invention;

Figure 6 is an explanatory diagram showing the content of a process by a component analyzing unit;

Figure 7 is an exemplary diagram showing a schematic structure of a receiving device according to another embodiment of the present invention; and

Figure 8 is an exemplary diagram showing a schematic structure of a receiving device according to another embodiment of the present invention.

An embodiment of the present invention will be explained below. The embodiment to be explained below is intended for illustration, not to limit the scope of the present invention. Therefore, though those having ordinary skill in the art can employ embodiments in which any or all of the components of the present embodiment are replaced with equivalents of those, such embodiments will also be included in the scope of the present invention.

In the following explanation, independent component analysis will be employed as an example of the component analysis method. However, by a similar manner to this, the component analysis method can be replaced by principal component analysis (including component analysis by sphering) or non-negative matrix factorization, and such embodiments will also be included in the scope of the present invention.

[Example 1]

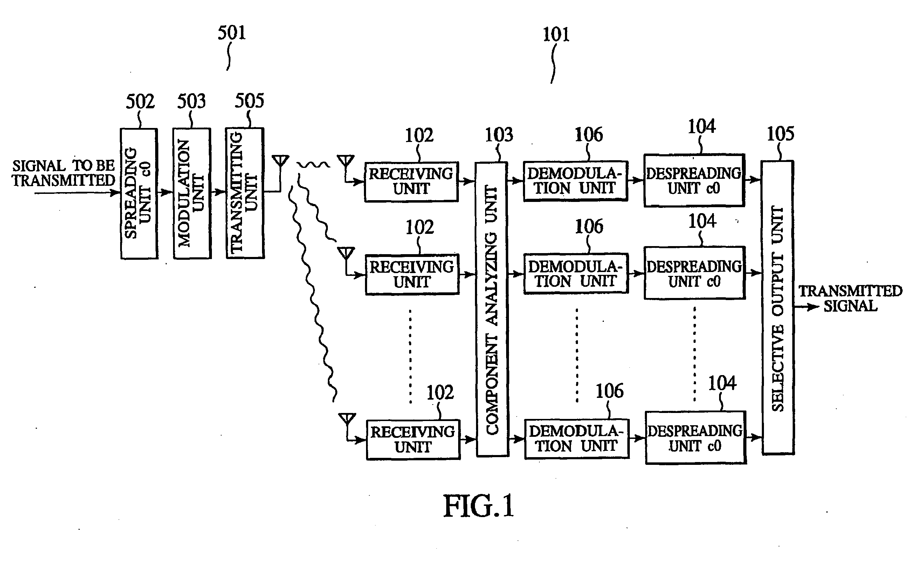

Figure 1 is an exemplary diagram showing a schematic structure of a transmitting device and a receiving device according to one embodiment of the present invention. The following explanation will be given with reference to this diagram.

As shown in this diagram, in the transmitting device 501 according to the present embodiment, a spreading unit 501 spreads a signal to be transmitted by a predetermined chaos spreading code (c0), a modulation unit 503 modulates it by a carrier wave, and a transmitting unit 505 transmits the signal from one antenna or a plurality of antennas (in this diagram, there is one antenna).

On the other hand, in the receiving device 101, signals received by receiving units 102 with receiving antennas placed at a plurality of different locations are analyzed by a component analyzing unit 103 according to independent component analysis, whereby a plurality of signals are obtained, which are then demodulated by demodulation units 106, subsequently despread by despreading units 104 by the same predetermined chaos code (c0) as that of the transmitting device 501, and one of the signals that have the highest power after the despreading is selected and output by a selective output unit 105 as the received signal.

The demodulation units 106 may be arranged between the receiving units 102 and the component analyzing unit 103. This also applies to any embodiments below.

The method of independent component analysis is as disclosed in [Patent Literature 3], with a difference between the present embodiment and the technique of [Patent Literature 3] lying in that a code of a maximum-length sequence is used as the spreading code in [Patent Literature 3], whereas a chaos code is used as the spreading code in the present embodiment.

In the present embodiment and later embodiments, a random number sequence obtained by applying a predetermined Chebyshev polynomial repeatedly to a predetermined initial value is used as the chaos code, but various other chaos codes may be used.

A Chebyshev polynomial of a-th order is a polynomial T(a, •) defined by

$$T(a, \cos\theta) = \cos(a\theta).$$

Specifically, the followings are Chebyshev polynomials.

$$T(0, x) = 1;$$

$$T(1, x) = x;$$

$$T(2, x) = 2x^2-1;$$

$$T(3, x) = 4x^3-3x; \ldots$$

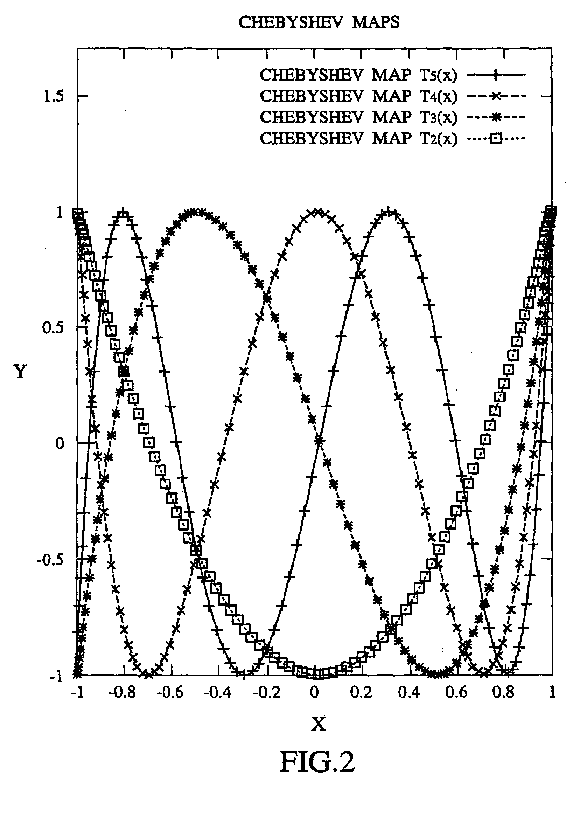

Figure 2 is an explanatory diagram showing second-order to fifth-order Chebyshev polynomials by graphs. The following explanation will be given with reference to this diagram.

As shown in this diagram, any Chebyshev polynomial of second-order or higher is a rational map in which a closed interval -1<x<1 is mapped to a closed interval -1<y<1.

A random number sequence

$z_0, z_1, z_2, \ldots$

which is generated from a Chebyshev polynomial is derived, when an initial value $z_0$ is given, from a recurrence equation

$$z_{i+1} = T(a, z_{i+1})$$

where i≥0.

Specifically, the result of applying the function T(a, •) to the initial value $z_0$ is $z_1$, the result of applying the function T(a, •) to $z_1$ is $z_2$, ..., and the sequence of the results obtained by repeatedly applying the function T(a, •) to an obtained result in this manner is a random number sequence of chaos random numbers.

The same random number sequence can be obtained if the initial value for generating the chaos random number is shared between the transmitting side and the receiving side. CDMA communications are performed with the used of this random number sequence.

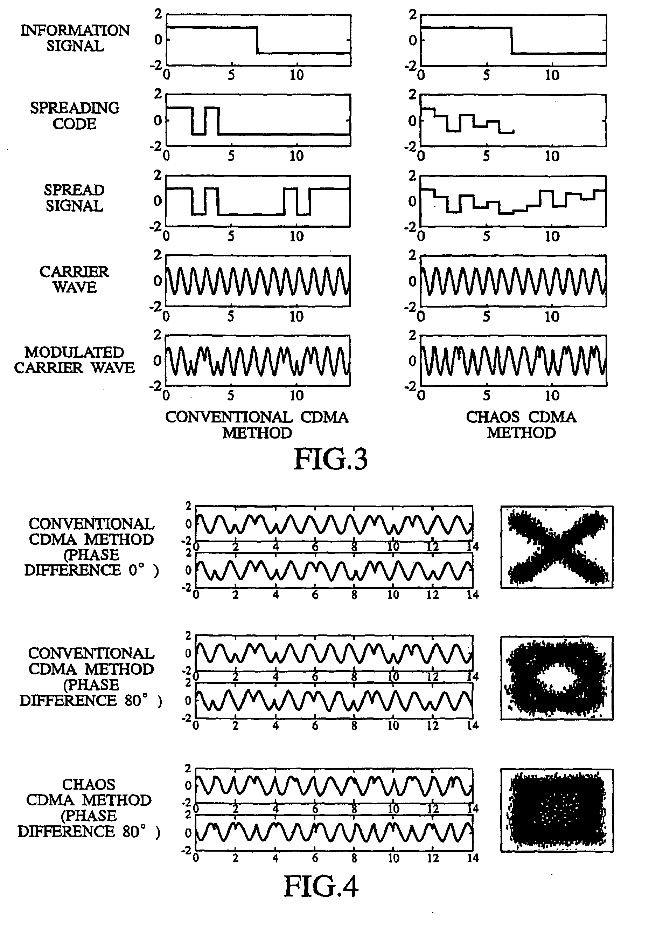

Figure 3 is an explanatory diagram showing the states of the spreading codes, spread signals, carrier waves, and the modulated carrier waves, in a conventional CDMA method and in the chaos CDMA method. The following explanation will be given with reference to this diagram.

The information signal is the signal which is to be transmitted from the transmitting device 501 to the receiving device 101, takes two values of 1 and -1, and has a chip length (a unit of signals in the temporal direction) of 7 (generally, N (N≥2)) in the example shown in these diagrams.

The spreading code has the same chip and takes two values of 1 and -1 in the conventional CDMA method, while it is a multilevel code taking any values between 1 and -1 in the chaos CDMA method. Accordingly, the spread signal appears greatly differently. The lowermost diagrams show how the carrier wave is phase-modulated by the spread signal.

Figure 4 is an explanatory diagram showing distributions of two signals to which different spreading codes have been applied, regarding the cases where these signals are received at various phase differences. The following explanation will be given with reference to this diagram.

At the left side of the diagrams are shown graphs representing the states of the two signals to which different spreading codes have been applied. The distribution diagrams at the right side of the diagrams are diagrams plotting the points whose x-coordinate is the value of one of the signals at given time points, and whose y-coordinate is the value of the other signal at the given time points.

The top diagrams in the diagrams are the distribution diagrams of the case where the phase difference is 0° in the conventional CDMA communications. With reference to the distribution diagram at the right side, an X-like shape is clearly observed and it can be known that the distribution is greatly uneven.

The middle diagrams in the diagrams are the distribution diagrams of the case where the phase difference is 80° in the conventional CDMA communications. According to the distribution diagram at the right side, the signal distribution takes a shape formed by two ellipses overlapping in X-like shape, and has none distributed about the center. It can therefore be known that the distribution is likewise greatly uneven.

Such distributions appear because the modulated signals have either a section in which completely the same waveform as that of the carrier wave appears or a section in which a waveform which is simply reversed upside down from the waveform of the carrier wave appears, in the conventional CDMA communications.

The presence of such unevenness in the distribution means that the independence between the two signals is poor. Therefore, even if component analysis is applied to them, the percentage of success in the separation will be low ([Non-Patent Literature 2]).

Accordingly, even if the technique disclosed in [Patent Literature 3] is realized, the separation performance by independent component analysis is low, and those having ordinary skill in the communication techniques would judge that there is no technical meaning in employing independent component analysis at an early stage. It can be considered that the technique disclosed in [Patent Literature 3] cannot obtain a desired performance in many cases.

On the other hand, the lowest diagrams in the diagrams concern a case of checking how it is at the phase difference of 80° in the chaos CDMA communications. By looking at the distribution diagram at the right side, it can be known that the distribution is even. Accordingly, the two signals are highly independent.

Generally, in chaos CDMA communications, similar distributions to that shown at the right side of the lowest diagrams of the present diagrams can be obtained at any phase differences. Accordingly, regardless of the phase difference, component analysis, if carried out, will achieve a high separation success rate.

As described above, it has conventionally been considered difficult to realize the method of improving the separation performance by applying component analysis in CDMA communications. Hence, the idea of incorporating component analysis in chaos CDMA communications with expectation that the separation performance will improve and the attainment of this technique are unique to the inventor, cannot easily be conceived by those having ordinary skill in the art, and could not have been realized but for the efforts of the inventor.

[Example 2]

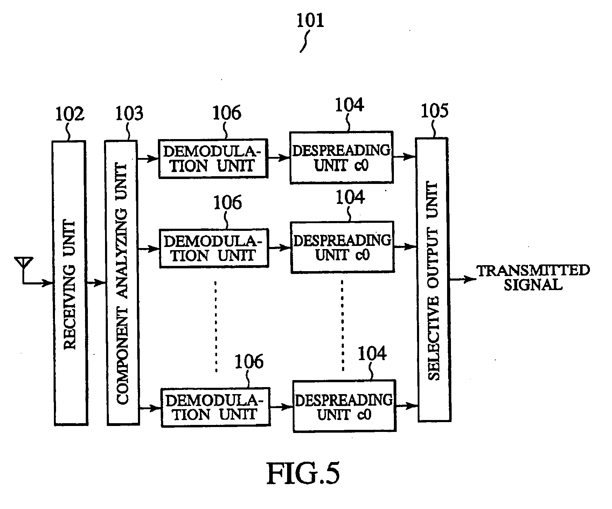

Figure 5 is an exemplary diagram showing a schematic structure of a receiving device according to another embodiment of the present invention. The following explanation will be given with reference to this diagram.

The receiving device 101 comprises a receiving unit 102, a component analyzing unit 103, despreading units 104, a selective output unit 105, and modulation units 106, which are configured as follows.

First, the receiving unit 102 receives a signal directly spread by a chaos code, which is transmitted from a transmitting device.

The signal received by the receiving unit 102 is generally a signal transmitted wirelessly, to which components of not only the transmitting device which the receiving device 101 requests to have communication with, but also components (of any other transmitting device, noises of various kinds, influences of reflection, delay, and interference in the radio wave transmission paths, etc.) that are emitted from any other radio wave emission source are added.

In a case where the transmitting device is to transmit a signal by using a chaos code, it typically encodes the signal to be transmitted, multiplies the resultant signal by a chaos code common to the receiving device 101, modulates the carrier wave, and then wirelessly transmits the signal from an antenna.

On the other hand, the component analyzing unit 103 performs component analysis of the received signal, and separates it into a plurality of components. As described above, independent component analysis is used in the present embodiment. The process of the component analyzing unit 103 will be specifically explained below.

The received signal is the result of multiplication of a signal as shown at the lowermost-left diagram of FIG. 3 by a multiplier corresponding to the condition of the transmission path, and subsequent addition. At this time, if there have been a plurality of transmission paths, the signal has received influences of delays and influences of noises in the transmission paths.

In chaos CDMA, different noise sequences are assigned to different communication sessions (combinations of transmitting devices and receiving devices 101) as spreading codes, but their time length T can be considered to be uniform.

According to the spreading techniques shown in FIG. 3, since the length of the spreading code is 7, this time length T is a 7-chip length. Accordingly, where a 1-chip length is d, it can be said that T=7d in the example shown in FIG. 3.

Generally, any of principal component analysis (including component analysis by sphering), independent component analysis, and component analysis by non-negative matrix factorization (NMF) outputs M ($1 \leq M$) number of vectors having the same length as the result of component analysis, when given M number of vectors having a uniform length as inputs. At this time, any of the vectors having large sizes among the vectors obtained as the result of component analysis is the signal that is intended to be transmitted to the receiving device 101, and the rest of the vectors are signals intended to be transmitted to other receiving devices or noises.

Received through the antenna is only one signal. That is, there exists only one vector having an infinite length. The received signal is a signal having been embedded on a carrier wave and such a signal is to be digitally processed. Therefore, it is desired that the time unit e in which each component of the vector of the received signal is sequentially extracted (this time unit corresponding to the sampling frequency of the received signal) be shorter than the chip length d of the spreading code ad shorter than a frequency 1/f calculated from the carrier frequency f of the carrier wave.

In a case where the vector of the received signal can be represented as $r_0$, $r_1$, $r_2$, ... , the number C, of the components of the vector, which corresponds to the time length T is $C = T \times f$. The number C may be any integer multiple ($2 \times T \times f$, $3 \times T \times f$, ...) of this.

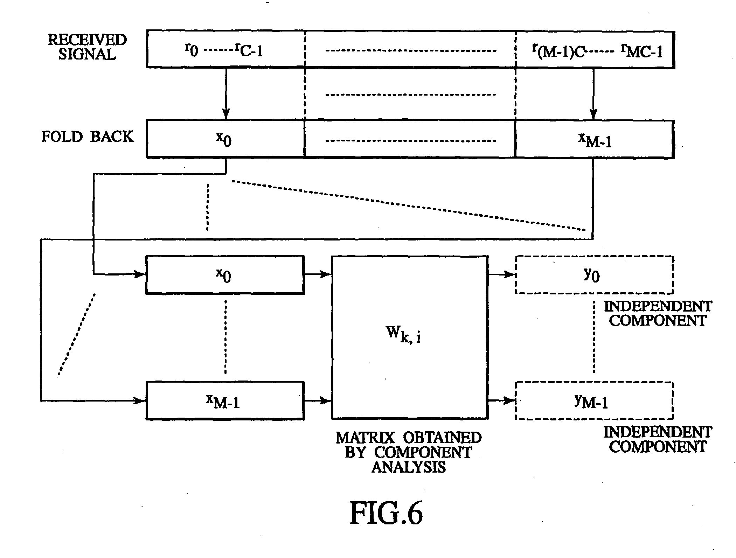

Figure 6 is an explanatory diagram conceptually showing how the process by the component analyzing unit 103 is. The following explanation will be given with reference to this diagram.

The component analyzing unit 103 executes the process each time the components of the vector of the received signal are accumulated to a number MC. That is, the component analyzing unit 103 groups $r_0, r_1, r_2, ..., r_{MC-1}$ as the unit of the subsequent process, starts counting from 0 again when the process is carried out to the end, and repeats the same process for a new set of $r_0, r_1, r_2, ..., r_{MC-1}$.

The component analyzing unit 103 separates
$r_0, r_1, r_2, ..., r_{MC-1}$
into M number of vectors
$x_0, ..., x_{M-1}$
which have the length C, as follows.
$x_0 = (r_0, ..., r_{c-1})$,
$x_1 = (r_c, ..., r_{2c-1})$,
...,
$x_{M-1} = (r_{(M-1)C}, ..., r_{MC-1})$
Hereinafter, for example, a notation like $x_i(t)$ will be used to express a component of a vector.

$$x_i(t) = r_{iC+t} \quad (0 \le i < M, \; 0 \le t < C)$$

is established. As regards other vectors too, a notation "·(t)" will be used to represent that "it is the t-th component counted from the origin being zero".

The vectors, which will result from component analysis, are to be represented as
$y_0, ..., y_{M-1}$, and in the present embodiment, a maximum likelihood matrix $W_{k,i}$ ($0 \le k, i < M$), which will satisfy

$$y_k(t) = \sum_{i=0}^{M-1} W_{k,i} \, x_i(t)$$

is to be obtained by component analysis.

Various techniques disclosed in [Patent Literature 1], [Patent Literature 3], [Non-Patent Literature 1], [Non-Patent Literature 2], etc. can be used as a specific method for independent component analysis or the like. Various techniques such as a method of obtaining $W_{k,i}$ after obtaining $y_0, ..., y_{M-1}$, a method of directly calculating the matrix $W_{k,i}$, etc. are proposed, and these methods can arbitrarily be used.

When a maximum likelihood matrix $W_{k,i}$ is obtained by calculation, the component analyzing unit 103 obtains M number of vectors
$z_0, ..., z_{M-1}$
which have the same length as the received signal
$r_0, r_1, r_2, ..., r_{MC-1}$,
by a calculation of

$$z_k(t) = \sum_{i=0}^{M-1} W_{k,i} \, r_{(t/C) \times C + i}$$
$$= \sum_{i=0}^{M-1} W_{k,i} \, r((t/c) \times C + i),$$

and outputs them. Here, t/C is an integer division, and any remainder should be discarded. By this, the modulated signal can have been separated into a plurality of components.

In the example described above, the range of the subscript k of z is 0, ..., M-1. However, more generally, N, which is equal to or smaller than M, may be used and the range of k may be 0, ..., N-1.

Further, as described above, the value of C may be any of Tf, 2Tf, 3Tf, .... Therefore, C can be arbitrarily selected according to the number N, into which the signal should be separated.

The process to follow thereafter is the same as ordinary chaos CDMA communications. The demodulation units 106 demodulate the respective separated signals from the carrier waves, and the despreading units 104 despread the respective demodulated signals by the chaos code c0 assigned to the receiving device 101 concerned. As a result, a plurality of signals are obtained.

Then, the selective output unit 105 selects a signal having a high intensity from the plurality of despread signals, and decodes the selected signal, thereby obtaining the signal that is intended to be transmitted.

The transmitting side might sometimes "transmit a bare signal", as one way of modulation on a carrier wave. In this case, the demodulation units 106 can be omitted. Further, the demodulation unit 106 may be arranged at an earlier stage than the component analyzing unit 103. In this case, only one demodulation unit 106 is required.

As described above, according to the present embodiment, if the input signal is folded back by the unit of the number MC, independent component analysis is made available eve if there is only one receiving antenna. This means that the configuration of the present embodiment is greatly different from that of [Patent Literature 3].

[Example 3]

In the foregoing embodiment, consideration has been given on the situation that one signal transmitted from one transmitting device is joined by other signals and received together.

In the present embodiment, CDM (Code Division Multiplex), in which one transmitting device collectively transmits a plurality of signals, is assumed. That is, this is another method of the foregoing embodiment, in which N sets of combinations of transmitting devices and receiving devices are prepared and N kinds of signals are transmitted.

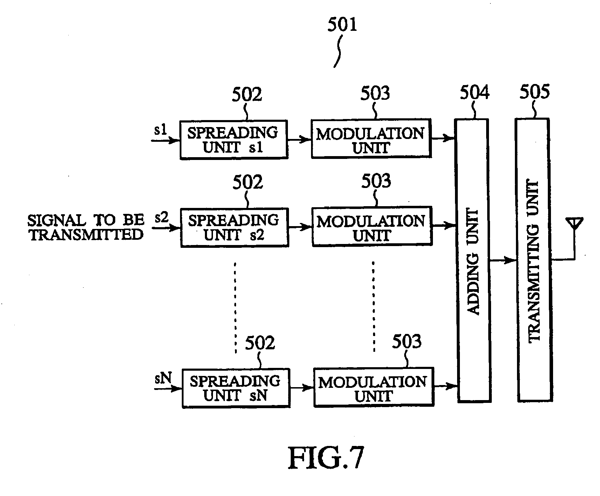

Figure 7 is an exemplary diagram showing a schematic structure of a transmitting device according to the present embodiment. The following explanation will be given with reference to this diagram.

In the transmitting device 501, spreading units 502, to which different chaos codes $c_1, ..., c_N$ are assigned, spread N number of information signals $s_l, ..., s_N$ respectively, modulation units 503 modulate the respective signals on carrier waves, an adding unit 504 adds them, and a transmitting unit 505 transmits the signal from one antenna. Here, the chaos codes $c_1, ..., c_N$ have the same length (the same time length, too).

The spreading results of the spreading units 502 may be added together by the adding unit 504 before carrier wave modulation is done by one modulation unit 503, in order that that a signal is transmitted from one antenna.

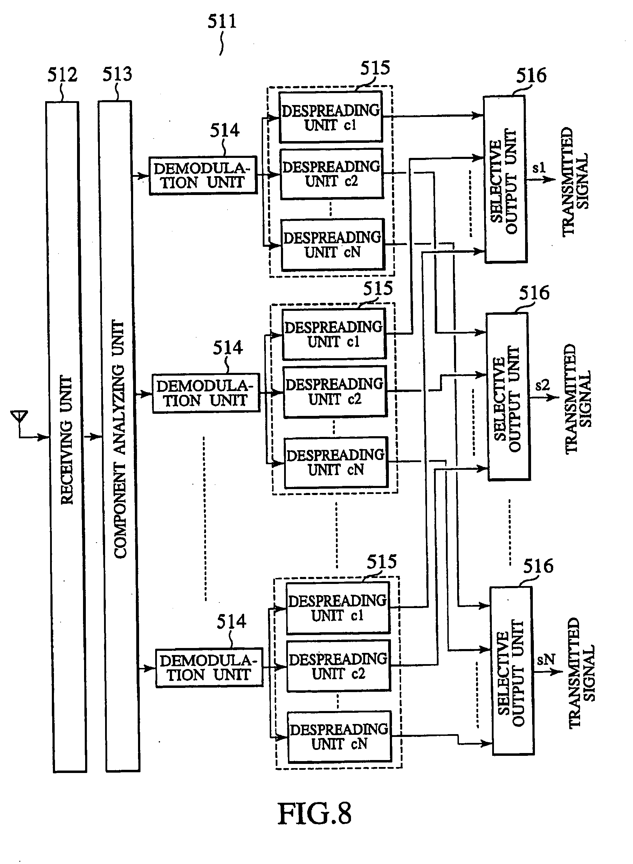

On the other hand, FIG. 8 is an exemplary diagram showing a schematic structure of a receiving device according to the present embodiment. The following explanation will be given with reference to this diagram.

In the receiving device 511, a receiving unit 512 receives a transmitted signal by one antenna, and a component analyzing unit 513 separates it into a plurality of signals.

Separated signals are demodulated from the carrier waves by demodulation units 514 respectively. Thereby, an N number of signals are obtained. An N umber of despreading units 515 despread these signals respectively.

The set of spreading codes assigned to the N number of despreading units 515 is the same as the set of spreading codes $c_1, ..., c_N$ assigned to the spreading units 502 of the transmitting device 501.

Finally, selective output units 516 associated in one-to-one correspondence with $c_1, ..., c_N$ each receive the full outputs from the spreading unit 502 to which the same spreading code is assigned, and select and output one among them that has the highest signal intensity.

Thereby, an N number of transmission signals $p_1, ..., p_N$ corresponding to $s_1, ..., s_N$ at the transmitting side can be acquired.

[Example 4]

In the above-described example, the component analyzing unit 103 repeats the process at each MC number of input signals as the unit. The unit of repetition may be the number C. That is,

at 0-th repetition, $z_0, ..., z_{MC-1}$ are obtained from received signals $r_0, ..., r_{MC-1}$ (initialization),

at 1st repetition, $z_{MC}, ... , z_{(M+1)C-1}$ are obtained from received signals $r_c, ... , r_{(M+1)C-1}$,

at 2nd repetition, $z_{(M+1)C}, ..., z_{(M+2)C-1}$ are obtained from received signals $r_{2C}, ... , r_{(M+2)C-1}$,

at 3rd repetition, $z_{(M+2)MC}, ... , z_{(M+3)C-1}$ are obtained from received signals $r_{3C}, ..., r_{(M+3)C-1}$,

...

at n-th repetition, $z_{(M+n-1)MC}, ...., z_{(M+n)C-1}$ are obtained from received signals $r_{nC}, ... , r_{(M+n)c-1}$.

In this manner, an MC number of received signals are accumulated while signal output is by the unit of the number C, according to this method.

This unit of repetition C may also be any integer multiple of C (where the multiplier is equal to or smaller than M).

According to the present embodiment, even in a case where the surrounding radio wave environment relatively easily changes, the degeneration of the separation performance can be suppressed to the lowest level possible.

[Example 5]

In the example 2 and 3 described above, the assumed situation is that there is only one receiving antenna. However, these techniques can likewise be applied to a case where there are a plurality of receiving antennas. The method of separating the signals simply into the same number of independent components as the number of receiving antennas is as explained in [Patent Literature 3] and in the example 1.

Meanwhile, according to the present embodiment, signals received by a plurality of receiving antennas can be separated into a larger number of components than the number of the receiving antennas, by the signals being folded back as in the above-described embodiment.

In a case where the number of receiving antennas is L, input signals amounting to the unit of the number MC, which are required for component analysis, can be accumulated in a period of time required for receiving an MC/L number of signals. When the signals amounting to the unit of the number MC are acquired in this way, component analysis can be applied as in the above-described embodiments.

Hence, the present invention can be applied even under MIMO (Multi Input Multi Output) environment as in the [example 1] and in the present example, and the present embodiment is also included in the scope of the present invention.

According to the present invention, it is possible to provide a receiving device and receiving method suitable for improving the communication performances by performing signal separation in CDMA communications using a chaos code, and a program for realizing these on a computer or on a digital signal processor.

Various embodiments and changes may be made thereunto without departing from the broad spirit and scope of the invention. The above-described embodiments are intended to illustrate the present invention, not to limit the scope of the present invention. The scope of the present invention is shown by the attached claims rather than the embodiments. Various modifications made within the meaning of an equivalent of the claims of the invention and within the claims are to be regarded to be in the scope of the present invention.

**Claims**

1. A receiving device (101), **characterized by** comprising:

   a receiving unit (102) which receives a signal transmitted from a transmitting device after being directly spread by a chaos code;
   a component analyzing unit (103) which applies component analysis to the received signal and separates it into a plurality of components;
   a despreading unit (104) which obtains a plurality of signals, by despreading the plurality of separated components by the chaos code respectively; and
   a selective output unit (105) which selects a signal having a large intensity from the plurality of despread signals, and outputs it.

2. The receiving device (101) according to claim 1,
   **characterized in that** the component analysis by said component analyzing unit (103) is done by any one of principal component analysis, independent component analysis, component analysis by non-negative matrix factorization (NMF), and component analysis by sphering.

3. The receiving device (101) according to claim 1,
   **characterized in that** the chaos code is made of a random number sequence obtained by repeatedly applying a predetermined Chebyshev polynomial to a predetermined initial value.

4. The receiving device (101) according to claim 1,
   **characterized in that** the transmitting device transmits the spread signal after modulating it,
   said receiving device (101) further comprises a demodulation unit (106) which obtains a plurality of components, by demodulating the plurality of separated components respectively, and
   said despreading unit (104) obtains a plurality of signals, by despreading the plurality of demodulated components by a plurality of the chaos code respectively, instead of despreading the plurality of separated components by the chaos code respectively.

5. A receiving method executed by a receiving device (101) having a receiving unit (102), a component analyzing unit (103), a despreading unit (104), and a selective output unit (105), said method **characterized by** comprising:

   a receiving step at which said receiving unit (102) receives a signal transmitted from a transmitting device after being directly spread by a chaos code;
   a component analyzing step at which said component analyzing unit (103) applies component analysis to the received signal and separates it into a plurality of components;
   a despreading step at which said despreading unit (104) obtains a plurality of signals by despreading the plurality of separated components by the chaos code respectively; and
a selective outputting step at which said selective output unit (105) selects a signal having a large intensity from the plurality of despread signals, and outputs it.

6. The receiving method according to claim 5,
**characterized in that** the component analysis at said component analyzing step is done by any one of principal component analysis, independent component analysis, component analysis by non-negative matrix factorization (NMF), and component analysis by sphering.

7. The receiving method according to claim 5,
**characterized in that** the chaos code is made of a random number sequence obtained by repeatedly applying a predetermined Chebyshev polynomial to a predetermined initial value.

8. The receiving method according to claim 5,
**characterized in that** said receiving device (101) further comprises a demodulation unit (106), and said transmitting device transmits the spread signal after modulating it,
said method further comprises a demodulating step at which said demodulation unit (106) obtains a plurality of components by demodulating the plurality of separated components respectively, and
at said despreading step, a plurality of signals are obtained not by the plurality of separated components being despread by the chaos code respectively, but by the plurality of demodulated components being despread by a plurality of the chaos code respectively.

9. A program **characterized by** controlling a computer to function as each unit of said receiving device (101) according to claim 1.

FIG.1

EP 1 833 174 A2

CHEBYSHEV MAPS

FIG.2

INFORMATION
SIGNAL

SPREADING
CODE

SPREAD
SIGNAL

CARRIER
WAVE

MODULATED
CARRIER WAVE

CONVENTIONAL CDMA
METHOD

CHAOS CDMA
METHOD

FIG.3

CONVENTIONAL
CDMA METHOD
(PHASE
DIFFERENCE 0° )

CONVENTIONAL
CDMA METHOD
(PHASE
DIFFERENCE 80° )

CHAOS
CDMA METHOD
(PHASE
DIFFERENCE 80° )

FIG.4

13

101

| 102 | 103 | 106 | 104 | 105 |

RECEIVING UNIT

COMPONENT ANALYZING UNIT

DEMODULA-TION UNIT

DESPREADING UNIT c0

SELECTIVE OUTPUT UNIT

TRANSMITTED SIGNAL

106

DEMODULA-TION UNIT

DESPREADING UNIT c0

104

106

DEMODULA-TION UNIT

DESPREADING UNIT c0

104

FIG.5

EP 1 833 174 A2

RECEIVED SIGNAL

| $r_0$ ------ $r_{C-1}$ | ------------------------------------- | $r_{(M-1)C}$ ----- $r_{MC-1}$ |

FOLD BACK

| $x_0$ | ------------------------------- | $x_{M-1}$ |

$x_0$ → $$W_{k,i}$$ → $y_0$

INDEPENDENT COMPONENT

$x_{M-1}$ → → $y_{M-1}$

MATRIX OBTAINED BY COMPONENT ANALYSIS

INDEPENDENT COMPONENT

# FIG.6

FIG.7

FIG.8

**EP 1 833 174 A2**

**Patent documents cited in the description**

- JP 2003141102 A
- JP 2001292129 A
- JP 2005051344 A

**Non-patent literature cited in the description**

- Learning the parts of objects by non-negative matrix factorization. **D. D. LEE ; H. S. SEUNG.** Nature. Macmillan Magazines Ltd, October 1990, vol. 401, 788-791
- **J. JOUTSENSALO ; T. RISTANIEMI.** Learning Algorithms for Blind Symbol Separation in CDMA Downlink. *Proceedings of PIMRC' 98,* September 1998, http://www.jyu.fi/jyrkij/pimrc98.ps